# EUROPEAN PATENT SPECIFICATION

(11) **EP 4 522 976 B1**
(45) Date of publication and mention of the grant of the patent: **01.07.2026**
(21) Application number: 22728824.8
(22) Date of filing: 11.05.2022
(51) Int. Cl.: G01N 17/02, G01K 11/32, G01M 3/00, G01K 1/14, G01M 5/00

(54) **METHOD FOR EARLY CORROSION DETECTION UNDER INSULATION**
VERFAHREN ZUR FRÜHZEITIGEN KORROSIONSERKENNUNG UNTER ISOLIERUNG
PROCÉDÉ DE DÉTECTION PRÉCOCE DE LA CORROSION SOUS ISOLATION

(43) Date of publication of application: 19.03.2025
(73) Proprietor: Fluves NV, 9000 Gent (BE)
(72) Inventor: LANCKRIET, Thijs, 9050 Gentbrugge (BE); VAN HOESTENBERGHE, Thomas, 9050 Gentbrugge (BE); DE VLEESCHOUWER, Niels, 9050 Gentbrugge (BE)
(74) Representative: Brantsandpatents bv
(86) International application number: PCT/EP2022/062806
(87) International publication number: WO 2023/217367

(56) References cited:
- US-A1- 2006 225 507
- US-A1- 2012 179 390
- US-A1- 2015 377 716
- GROSSWIG S. ET AL: "Pipeline leakage detection using distributed fibre optical temperature sensing", ALGORITHMS AND TECHNOLOGIES FOR MULTISPECTRAL, HYPERSPECTRAL, AND ULTRASPECTRAL IMAGERY XIX - PROCEEDINGS OF SPIE, vol. 5855, 23 May 2005 (2005-05-23), US, pages 226 - 229, XP055956011, ISSN: 0277-786X, ISBN: 978-1-5106-4548-6, DOI: 10.1117/12.623803

## Description

### FIELD OF THE INVENTION

The present invention relates to a method for monitoring defects in pipelines and/or containers with an insulation layer, preferably aboveground or underground, and non-subsea. The invention relates to corrosion monitoring method and more specifically a permanently installed monitoring system for corrosion under insulation (PIMSCUI).

In a second aspect, the present disclosure, not part of the claimed invention, also relates to a system for monitoring defects of insulated pipes and/or containers, preferably configured for being used in the method of the first aspect.

In a third aspect, the present disclosure, not part of the claimed invention, relates to the use of a method and/or system according to the first and second aspects for monitoring of defects, and specifically corrosion monitoring, of insulated pipeline sections and/or containers.

The present invention pertains to the technical field: Protection of pipes or pipe fittings against corrosion or incrustation.

### BACKGROUND

Like other modes of transportation that are vital to the world economy, pipelines are essential in linking points of production to points of consumption. Pipelines provide an efficient means of transporting chemicals, feed, food, oil, water and natural gas between reactors, but also between production sites, refineries, processing plants and to the consumer. Containers and tanks hold similar importance in many industrial, agricultural and other processes.

Due to its importance in providing access to oil, fuel, and other materials, it is of importance that a pipeline/container undergoes limited integrity failures. Such integrity failures may be facilitated by internal issues such as material defects (e.g., leaks or cracks), outside forces (e.g., destruction by human error), or corrosion.

Major problems can happen if corrosion starts to spread under the insulation, known as corrosion under insulation (CUI). Corrosion is caused by interaction of water with the pipeline. There are two primary water sources involved. First, breaks in the weatherproofing can lead to infiltration of water to the metal surface from external sources such as rainfall, drift from cooling towers, condensate falling from cold service equipment, steam discharge, process liquid spillage, spray from fire sprinklers, deluge systems, washrooms, and from condensation on cold surfaces after vapor-barrier damage. Second, a major corrosion problem develops in situations where there are cycling temperatures that vary from below the dew point to above-ambient temperatures. In this case, the classic wet/dry cycle occurs when the cold metal develops water condensation that is then baked off during the hot/dry cycle. The transition from cold/wet to hot/dry includes an interim period of damp/warm conditions with attendant high corrosion rates.

Damage can lead to major accidents if the corrosion damages a pipe carrying flammable or explosive fluids. Avoiding CUI is a major issue in, for example, the petroleum and chemical industries. Operators cannot predict where CUI has happened, so hundreds of kilometers of insulated piping must be manually inspected on a regular schedule. CUI, if left unmanaged, usually leads to several plant issues including unscheduled shutdowns followed by costly maintenance and repair operations.

Moisture sensors exist in all shapes and types, but have important drawbacks that limit their usefulness in many environments susceptible to corrosion under insulation. Visual inspection is still often used, but also has important drawbacks. Besides the low efficiency, the fibrous nature of conventional insulation causes the moisture to spread via capillary action to areas beyond the point of entry in a process. Corrosion will also occur in areas where the jacketing may otherwise seem unaffected, which is impossible to control with visual inspection.

CN 111 022 833 discloses a leakage monitoring system for a pipeline with an insulation layer using an optical fiber to measure the temperature. In case of a leakage, the optical fiber measures the sudden increase in temperature and converts the optical signal to a temperature signal that is transmitted to the DTS system. The system issues an alarm and locates the leak point.

US 2010 319 435 discloses a technique that facilitates the detection of moisture in insulation. This is done using a system comprising two distributed sensor lines routed along the inner and outer side of the insulation layer for determining differential temperatures along the layer.

EP3126808 discloses an acoustic source configured to generate acoustic signals in the metal surface, wherein the acoustic signals interact with the fiber-optic cable and influence characteristics of the light. A signal processing unit is configured to determine a location of a change in the metal surface based on changes in the characteristics of the signal.

US 2006/0225507 describes a process and apparatus for sensing possible leaks in a pipeline. The pipeline is monitored continuously by acoustic monitoring means, and acoustic events indicating a possible leak are noted. The pipeline is also equipped with temperature monitoring means, and is monitored for temperature either continuously, periodically or on demand. A leak is deemed probable at any location where there is an acoustic event indicating a possible leak, and at approximately the same time, a temperature difference greater than a pre-chosen amount between that location and adjacent locations.

"Pipeline leakage detection using distributed fibre optical temperature sensing" by S. Grosswig describes a leakage detection system based on a distributed fibre optical temperature measurement method which is an analysing method for continuous detection and localization of leakages at pipelines in the steady and unsteady operation states. The leakage detection system is useable under the precondition that there is a sufficient large temperature gradient between the leakage area and the unaffected environment. This can be caused by the medium itself or through a physical effect due to the leakage, e.g. gas expansion, evaporation. It's a very sensitive method, so also creeping leakages can be detected.

Some methods for determining defects and or corrosion of insulated pipes cannot be installed once the installation is running without being disruptive or destructive. Furthermore, use in semi-continuous or batch systems might lead to many false positive errors. Methods based on acoustic signals require additional placement of acoustic emitters along the length of the pipeline.

The present invention aims to resolve at least some of the problems and disadvantages mentioned above. The aim of the invention is to provide a method which eliminates those disadvantages.

### SUMMARY OF THE INVENTION

The present invention and embodiments thereof serve to provide a solution to one or more of above-mentioned disadvantages. To this end, the present invention relates to a method for monitoring defects in pipelines and/or containers with an insulation layer according to claims 1-15. A main objective of the present invention is to provide a permanently installed monitoring system for corrosion under insulation (PIMSCUI) and a method for performing the monitoring of said system.

The invention specifically focuses on aboveground or underground, non-subsea pipelines and containers. Subsea installations are surrounded by a medium with an essentially constant temperature, with essentially no spatial (uniform temperature at varying depth, little variation in horizontal plane) or temporal variations (virtually no effect of day-night cycle or sun) in said temperature. It is amongst others those variations that make the present invention so suitable for non-subsea applications.

In what follows, in many instances reference is made to pipelines and pipeline sections. For the sake of brevity, this is considered to also comprise containers, unless stated otherwise.

In one aspect a permanently installed fiber optic technology for monitoring corrosion under insulation (PIMSCUI) continuously over large surface areas is provided. The technology revolves around discrete or continuous moisture under insulation monitoring using fiber optics, alone or in combination with direct measurements for CUI. Expected temperature values are determined based on several parameters such as insulation characteristics, environmental factors etc. Insulation defects can be detected if the measured temperatures deviate from their expected values.

In a preferred embodiment, the detection of the defects is furthermore based on a known thickness and thermal conductivity of the insulation layer around the pipeline section. Note that this can be a thickness profile and/or thermal conductivity profile along the length of the pipeline section if the diameter and/or the thermal conductivity (for instance, differences in type of insulation used) changes. These parameters can be measured/confirmed regularly or can be assumed/known values (for instance, based on the construction plans), and used as such.

### BRIEF DESCRIPTION OF FIGURES

### Figure titles

Figure 1: Schematic representation of insulated pipeline
Figure 2: Temperature difference over several meters of insulated pipeline under different wetness conditions
Figure 3: Cross-section of a preferred embodiment
Figure 4: Cross-section of an alternative embodiment

### Description of the Reference Signs

101 pipeline
102 substance
103 insulation
104 cladding
105 fiber optic cable

### DESCRIPTION OF FIGURES

Various aspects of the disclosure are described more fully hereinafter with reference to the accompanying figures.

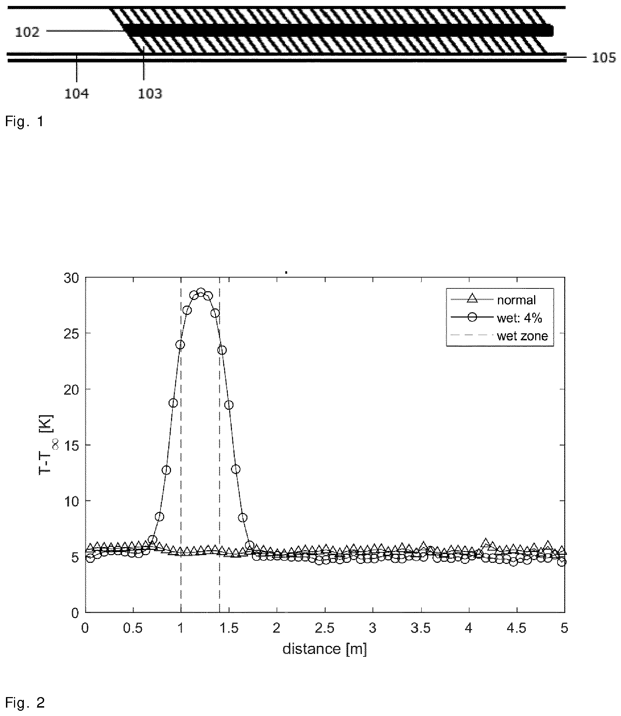

Figure 1 shows an insulated pipeline, including jacketing and fiber optic. When a pipeline is insulated, the heat of the pipeline in the center of the insulation will be conducted to the outside of the pipeline (through the insulation) and vice versa in case of reversed temperature profiles. The magnitude and temporal damping of the pipeline temperature towards the outside of the pipeline will depend on the thermal characteristics of the insulation. Most important thermal characteristics are insulation thickness, thermal conductivity and thermal capacity.

Corrosion is caused by interaction of water with the pipeline. Water comes in the insulation surrounding the pipeline through breaks in the weatherproof jacketing. Water infiltration leads to wet insulation, and because water conducts heat more efficiently than air, an aggressive corrosion cell is created where the trapped heat accelerates the rate of corrosion. It is clear that wet conditions surrounding the pipeline cause pipeline CUI.

In Figure 2, a temperature profile along the outside of a pipeline that is monitored via the method and system of the invention is shown in the circle-marked curve, with a temperature peak indicating a moisture ingress in insulation surrounding a pipeline. The shape of this temperature peak can vary according to the positioning of sensor cables, the type of vessel, the type and temperature of fluid contained in or passing through the vessel, the constant or intermittent nature of fluid passing through the vessel, the type of insulation used in the insulation layer, and other factors affecting the shape of the graph. The temperature profile of a pipeline without moisture ingress is shown as well, in the triangle-marked curve.

In this particular example, a fiber optic sensing cable is deployed adjacent to a 20 mm diameter pipeline with liquid temperature of 55°C higher than the outside temperature, and insulated with 50 mm of rockwool (thermal conductivity 0.034 W/m.K at 10°C). The fiber optic sensing cable detects and measures temperatures along the length of the insulated pipe as represented by the graph of Figure 2.

The triangle-marked curve shows the temperature measured with an optical fiber at the outside of an insulated pipeline segment (0-2.4 m) when the insulation is dry. Temperature along the length of the insulated pipe has increased with 5°C compared to not-heated pipeline. The circle-marked curve shows the same temperature measurements when the insulation has 4% (volume%) of moisture injected in the zone 1 - 1.4m, depicted by the dashed vertical lines. For this wetted segment between 1-1.4m the outside pipeline temperature is almost 30°C hotter than the ambient temperature (T∞). Because the outside pipeline temperature increase is only 5°C for dry insulation zones (zones 0-1m and 1.4-2.4m), the zone with wet insulation can easily be detected. Because the temperature sensing system (in the experiment, a Distributed Temperature sensing system or DTS system was used, although alternatives such as Fiber Bragg grating (FBG) based temperature sensing systems can be envisioned) measures temperature every minute, infiltration of water in the insulation can be detected in a very early state, before the pipeline corrosion starts.

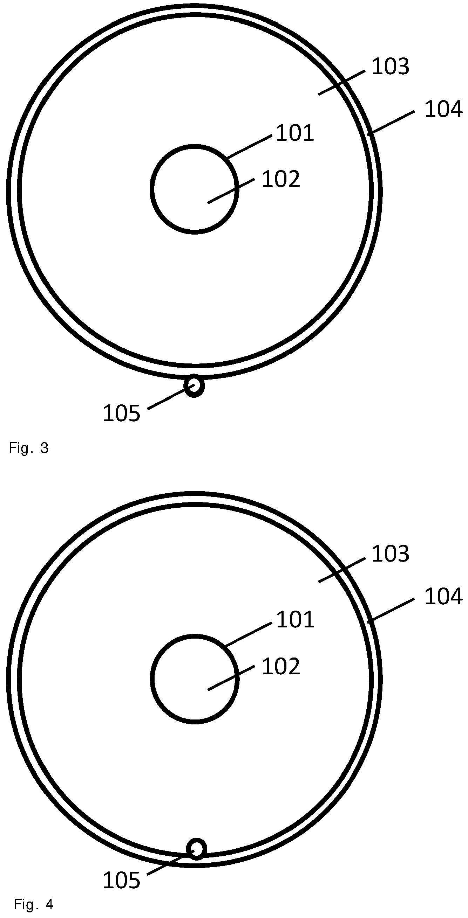

Figure 3 shows a cross-section of a preferred embodiment. Figure 3 shows a pipe 101 filled with a substance 102 (which may be liquid, gaseous, multiphase, or otherwise) at a temperature that is higher or lower than the ambient air temperature. The pipe is surrounded by insulation 103, which is protected by a cladding 104. The cladding may be made of aluminum. In a preferred embodiment, fiber optic cable 105 is installed on the outside of the cladding.

An alternative embodiment is shown in Figure 4, where the fiber optic cable 105 is installed between the insulation 103 and the cladding 104.

Other alternative embodiments:
- Fiber optic cable that is not at the bottom of the pipe but at the top, the sides, etc.
- fiber optic that is somewhere in the insulation 103

It is clear that the method according to the invention, and its applications, are not limited to the presented examples. The present invention is in no way limited to the embodiments described in the examples and/or shown in the figures. On the contrary, methods according to the present invention may be realized in many different ways without departing from the scope of the invention.

### DETAILED DESCRIPTION OF THE INVENTION

In the following detailed description section, specific embodiments of the present techniques are described. However, to the extent that the following description is specific to a particular embodiment or a particular use of the present techniques, this is intended to be for exemplary purposes only and simply provides a description of the exemplary embodiments. Accordingly, the techniques are not limited to the specific embodiments described below, but rather, include all alternatives, modifications, and equivalents falling within the true spirit and scope of the appended claims.

The present invention relates to a method for preventing, detecting and managing corrosion under insulation in insulated equipment, such as vessels for holding and/or carrying fluids. Said vessels can comprise pipelines, but also containers, such as tanks and the likes thereof. For example, a system according to the disclosure, not part of the claimed invention, can be used along the length of insulated piping or other insulated equipment. The system operates through detection of moisture in the insulation via ongoing evaluation of differential temperatures across the insulation or partial sections of insulation surrounding the piping or other equipment. This automatic, ongoing insulation evaluation affords improved risk assessments for corrosion under insulation. The ongoing evaluation also reduces the requirements for regular inspection and maintenance in, for example, a variety of plants, including oil and gas production/processing plants, refineries, chemical plants and other plants that use insulated vessels in plant operations.

Generally, distributed sensor lines, such as distributed temperature sensing system or Fiber Bragg grating (FBG) sensing system compatible sensor fibers or sensor cables, are deployed through or along the insulation surrounding piping or other equipment such that the sensor lines are separated by at least a portion of the insulation layer. The distributed or FBG sensor lines enable a distributed and continuous determination of the differential temperature across the insulation between the sensor lines via, for example, distributed temperature sensing technology or FBG temperature sensing technology. An initial temperature differential is established between the sensor lines as a reference temperature differential. This enables ongoing detection of any changes in the temperature differential, which can be indicative of moisture intruding on that particular region of insulation. If, for example, a region of the insulation is wetted via intrusion of water or other wetting agent, the sensor lines detect a reduction in temperature differential for that region due to impairment of the insulating properties of the insulation resulting from the moisture.

As mentioned, there are several existing technologies that may facilitate the monitoring of a pipeline for intrusions, including the use of acoustic or fiber-optic techniques. However, these techniques generally do not detect corrosion under insulation in an early stage.

In a first approach to the invention, it relates to a method for monitoring defects in an aboveground or underground, non-subsea pipeline section or container with an insulation layer, according to claim 1.

Preferably, the method is further characterized in that external information is collected, said external information comprising data regarding external heat/cold sources in the vicinity of the pipeline section or container and/or said external information comprising environmental data, wherein said environmental data comprises local environment temperature information, local precipitation information, local solar radiation information, meteorological information, comprising wind information; and wherein said data regarding external heat/cold sources at least comprises the position of the external heat/cold sources. The defects are then detected based on said external information, as well as the determined exterior temperature profile and the locally averaged exterior temperature profile along the length of the insulated pipeline section or over the surface of the insulated container.

Preferably, at least the data regarding external heat/cold source is used for the detection, and can, aside from position, also include one or more of temperature of source or expelled material, flow rate, expelled material information, dimensions, orientation, type of source, etc.

In some instances, no such external sources are present, in which case the environmental information becomes a dominant factor in the detection method. Most preferably however, both types of information/data are taken into account.

The term "averaging" and "averaged" as used in this document refer to any type of measure of central tendency, as used in statistics. This can refer to the use of a median, a mean (in the multiple definitions, such as the arithmetic mean, geometric mean, harmonic mean, a weighted arithmetic mean, a truncated mean, an interquartile mean, a trimean, etc., but preferably the arithmetic mean), a mode, a mid-range, etc. In preferred embodiments, the median is used, as this significantly lowers the impact of anomalies in the measurements (both incorrect results as well as outliers due to certain situations).

The term "container" refers to any type of industrial installation, such as a reactor tank, silo, etc., that forms a substantially closed volume (potentially having pipelines joining it).

The term "external heat/cold sources" refer to systems or objects that do not form part of the pipeline or container, that have a temperature that substantially differs from its surroundings, and that non-neglectably affects its surroundings' temperature, including that of the pipeline section/container. Typical sources are air/steam vents, industrial ovens, heating tapes, steam pipes other pipelines/containers, etc., but it can also comprise thermal bridges connected to the pipeline/container. Such thermal bridges can for instance be any contacting support structures for the pipeline or container, such as brackets and the likes, as they are typically made of metals or other thermally conductive materials.

In a preferred embodiment, the defects are detected based on the determined exterior temperature profile over a predefined time period. Preferably, this is based on a temporally averaged difference between the locally averaged exterior temperature profile and the determined exterior temperature profile over said predefined time period. The predefined time period can vary depending on the situation and can be adjusted, if necessary. It is preferably at least 5 minutes, 10 minutes, 15 minutes, 30 minutes, more preferably at least 1 hour, or 2 hours, 4 hours, 6 hours, 12 hours, even more preferably at least 1 day, 2 days, 3 days, and most preferably at least 1 week. Long time periods can of course be used, such as 2 weeks, a month, etc. Preferably however, the time period is kept relatively small, for instance at most one month or even less, such that changes in the weather and such conditions are kept limited (for instance, change of season).

In a further preferred embodiment, the temporally averaged difference excludes the determined exterior temperature profile during periods in said predefined time period, in which periods the determined exterior temperature profile differs from a reference temperature profile over less than a predefined delta value, said reference temperature profile preferably being an environmental, preferably atmospheric (in case of aboveground applications), temperature at or near to the pipeline section or container. Alternatively, a weighing can be associated to time periods/measurements, that is decreased depending on the situation, for instance based on the temperature difference between the determined exterior temperature profile and the reference temperature profile. The smaller the difference, the more the weight is decreased. This can be via a continuous weight function, but can also be discretized (temperature difference between A and B results in a weight of X, temperature difference between B and C results in a weight of Y, etc.).

Situations in which the outside temperature is relatively close to the temperature inside of the pipeline, the effect on the determined exterior temperature profile (i.e., its difference relative to the reference temperature profile), will be very small, which can result in obscuring the locally averaged exterior temperature profile. For instance, if for 90% of the predefined time period the difference is very low, and for 10% high, it may result in an averaged result that does not show a defect, as the measurable effect will be lowered by a factor 10. By removing such irrelevant data (and of course using an adjusted 'effective' predefined time period, reduced to the time in which the data was relevant), a reliable statistic can be produced for the temporally averaged difference.

The predefined delta value can be set differently depending on the situation and can be adjusted automatically and/or manually. Preferably the value is at least 0.10°C, or at least 0.25°C, more preferably at least 0.50°C, even more preferably at least 1.0°C.

Other factors can contribute to a small, negligible - or even contradictory - difference in temperature between the reference temperature profile and the determined exterior temperature profile. This can be resolved for instance by the temporally averaged difference excluding or reducing the weight of the determined exterior temperature profile during periods in said predefined time period, said periods being determined based on one or more of the following: time of day, season, wind conditions, other meteorological conditions, use parameters of the pipeline or container. Aside from outside temperature, further factors strongly influence the temperature at the sensors, and result in a negligible or even contradictory external heat transfer. A more prominent factor is wind condition. A strong wind, typically with other factors also contributing, effectively bleeds away any additional heat at the surface of the insulation where the sensor line is present, resulting in a miniscule temperature difference at the sensor line with respect to the surrounding environment. Another such factor is precipitation, as this can also quickly affect the temperature. Finally, if data is available on the use of the pipeline/container (for instance, temperature of a product inside), this can also be used to determine periods in which the system will likely not receive interesting data due to a very small temperature difference between the inside of the pipeline/container and the outside.

In a preferred embodiment, the defects are detected based on a lag between the determined exterior temperature profile, and the locally averaged exterior temperature or the environmental, preferably atmospheric, temperature at or near to the pipeline section or container, preferably wherein an increase in the lag indicates a higher moisture content of the insulation layer.

The lag can be determined based on a number of characteristics, such as peak, valley, rising limb, falling limb, etc.

Without wishing to be bound by theory, a higher lag in the variation of the temperature was noticed in situations where the insulation layer had a higher moisture content. Most likely, this is due to the much higher heat capacity of insulation with a high moisture content over dry insulation, making more heat seep into the insulation to effectively change the temperatures measured at the sensor line in moist insulation.

Similarly, in a preferred embodiment, potentially complimenting the above or separate from it, the defects are detected based on a temperature difference between the determined exterior temperature profile, and the locally averaged exterior temperature or the environmental, preferably atmospheric, temperature at or near to the pipeline section or container, preferably wherein an increase in the temperature difference indicates a higher moisture content of the insulation layer. Again, without wishing to be bound by theory, a higher temperature difference was detected in situations where the insulation layer had a higher moisture content, likely stemming from the increased thermal conductivity of the wet insulation.

Similarly, again preferably in combination with one or more of the above, a correlation was found between the variation over time of the determined exterior temperature profile and the moisture content of the insulation. As the environmental and/or circumstantial temperatures vary, this affects the determined exterior temperature profile. For examples where a high moisture content was present in the insulation layer, it was found that the variation in the determined exterior temperature profile over time was much lower than for situations with a lower moisture content. This allows again to determine the moisture content in the insulation layer by comparing the variations of separate points over the insulation layer, where comparing proximate points may provide for the most relevant information.

Similarly, again preferably in combination with one or more of the above, the moisture content may be determined by other forms of time series analysis of the determined exterior temperature profile time series, the locally averaged exterior temperature profile time series, and/or the environmental temperature time series. Time series analysis methods that may be used include, but are not limited to, cross-correlation, Fourier analysis, autoregressive integrated moving average (ARIMA) modelling, or long short-term memory (LSTM) or other neural networks.

In a preferred embodiment, the locally averaged exterior temperature profile is obtained without fiber-optic based temperature sensing and/or distributed temperature sensing in the monitored insulated pipeline section or the monitored insulated container, or between the monitored insulated pipeline section or the monitored insulated container and the insulation layer.

In a preferred embodiment, the method comprises the step of evaluating time series of spatial and temporal changes in the determined temperature profile, taking into account the locally averaged exterior temperature profile, to detect defects.

In a preferred embodiment, the method comprises the step of evaluating said determined temperature profiles and locally averaged exterior temperature profiles via machine learning-based anomaly detection.

In a preferred embodiment, structural data is collected, said structural data comprising known points of support, on known locations, where the pipeline section or container is supported by artificial elements, such as brackets or others, preferably said artificial elements having a thermal conductivity of at least 1 W/(m·K), preferably at least 5 W/(m·K), more preferably at least 10 W/(m·K), at room temperature, wherein the defects are detected based on said structural data. The structural data is preferably provided at the start of the methodology, but can be provided at later times, such that newly added supports can be included over time.

Specifically, the way this structural data regarding known points of support is taken into account, can be by excluding zones of the pipeline or container around such locations, as these provide anomalous data. The supports function as thermal bridges, substantially increasing or decreasing the temperature determined by the sensor line at these locations, depending on the temperature of the surroundings of the support (atmospheric or ground temperature). This is even more the case since, at these points of support, the insulation is often different than at other points, since it requires a solid connection point, while the insulation at other points is often (more) deformable. In order to avoid pollution of measurement data, measurements from points very close to the points of support can be entirely removed from the results in terms of the local averaging. As for determining whether the determined temperature profile at said points shows a defect, it is preferably compared to a locally averaged exterior temperature profile over a smaller zone, closer to the points of support. This reduced zone typically has a radius of at most 2.5 m, or even at most 1.0 m, or even more preferably at most 0.5 m or less, around said point. Of course, this may again vary on the specific situation.

In a preferred embodiment, environmental data is collected, said data comprising local environment temperature information, local precipitation information, local solar radiation information, meteorological information, comprising wind information, and the defects are detected taking into account said collected environmental data. This way, certain deviations can be accounted for, for instance an increase in temperature due to sunshine, lower temperature due to strong winds and/or precipitation, etc. Preferably, this is augmented by structural information relating to the surroundings, such as position relative to other structures, which can result into certain sections being in the shadow while others are irradiated by the sun; the same for wind, precipitation, etc.

For underground pipelines or containers, one or more further factors are taken into account, such as soil condition, soil moisture content, soil type, groundwater flow, while some of the previous factors may potentially be disregarded.

Even more preferably, it further takes into account such information as heat and/or cold sources, points of support, as discussed previously.

In a possible embodiment, the spatial distribution of the moisture ingress is assessed by a second sensor line attached along the length of the pipeline section or along the surface of the monitored insulated container to the exterior of the insulation layer, at a substantially opposite side with respect to the first sensor line, and wherein temperature measurements are performed by said second sensor line.

In a preferred embodiment, an absolute or relative depth of moisture ingress into the insulation layer is calculated for each detected defect based on the determined exterior temperature profile and the locally averaged exterior temperature profile. It is possible to estimate the depth of the moisture ingress, based on the measured data.

The reliability with which the depth can be estimated, can be improved over time via a number of ways. It is firstly possible to determine a correlation between the determined exterior temperature profile and locally averaged exterior temperature profile on the one hand, and the depth of ingress on the other hand. This correlation can be further improved over time due to the addition of historical data of confirmed defects, which are recorded into a system database. Additionally, a database with historical data on confirmed defects can be used, for instance in a machine learning model, to provide depth estimates for newly detected defects. Other techniques, such as the use of numerical and/or analytical models also provide for advantages in predicting and characterizing new defects. The estimate can provide an indication on how urgent a problem is, and how it evolves. It should be noted that corrosion only becomes important once the moisture ingress has proceeded through the full insulation layer, and reaches the pipeline itself. The evolution of the moisture ingress depth is particularly useful as it can be logged against actions/circumstances, and can associate the effect on the evolution to said actions/circumstances.

In a preferred embodiment, the predetermined surrounding length for determining the locally averaged exterior temperature profile is at least 0.5 m, preferably at least 1.0 m, more preferably at least 2.5 m, even more preferably at least 5.0 m, and is at most 500 m, preferably at most 250 m, more preferably at most 100 m, and even more preferably at most 50 m. In case of a container, the surrounding surface is within a radius of at least 0.5 m, preferably at least 1.0 m, more preferably at least 2.5 m, even more preferably at least 5.0 m, and within a radius of at most 500 m, preferably at most 250 m, more preferably at most 100 m, and even more preferably at most 50 m.

For pipelines, the senor line is provided longitudinally along the pipeline. For containers, a more complicated positioning is required, to cover the surface of the container sufficiently. This can be accomplished in many ways, but will always require an accurate mapping of the points at which the temperature is actually measured, in order to allow the averaging within a certain radius.

In a preferred embodiment, the defects are detected based on a local temperature difference between the determined exterior temperature profile and the locally averaged exterior temperature profile. Based on the local temperature difference exceeding a predetermined threshold, a defect is considered to be detected at a position. Said threshold is preferably at least 0.10°C, more preferably at least 0.20°C, even more preferably at least 0.25°C, even more preferably at least 0.30°C or even 0.40°C, 0.50°C or more. The threshold is preferably at most 10.0°C, but more preferably at most 5. 0°C, or even 2.5°C, or even 2.00°C, or even 1.50°C, and even 1.0°C or 0.50°C. As mentioned before, higher differences can point towards a deeper intrusion of moisture ingress in the insulation, and one or more further thresholds can be defined to showcase this, for instance with a final threshold indicating that inspection/repairs are urgent, said final threshold for instance being above 1.0°C.

In a further aspect, the disclosure, not part of the claimed invention, relates to a system for monitoring defects relating to moisture ingress of aboveground or underground, non-subsea insulated pipes and insulated containers, comprising:
- a sensor line, comprising a single optical fiber or a bundle of optical fibers, along the length of the insulated pipeline section or along the surface of the monitored insulated container and positioned on the exterior of the insulation layer;
- a temperature sensing system, preferably a distributed temperature sensing (DTS) system or a Fiber Bragg grating (FBG) temperature sensing system, for determining an exterior temperature profile over the length of the insulated pipeline section or along the surface of the monitored insulated container;
- a data processing unit for detecting defects in the insulated pipeline section or the insulated container;
The defects are then detected based on the determined exterior temperature profile and a locally averaged exterior temperature profile along the length of the insulated pipeline section or along the surface of the monitored insulated container, wherein said locally averaged exterior temperature profile is determined for a point by averaging the determined exterior temperature profile over a predetermined surrounding length or surface for said point.

In a preferred embodiment, external information is collected, said external information comprising data regarding external heat/cold sources in the vicinity of the pipeline section or container and/or said external information comprising environmental data, wherein said environmental data comprises local environment temperature information, local precipitation information, local solar radiation information, meteorological information, comprising wind information; and wherein said data regarding external heat/cold sources at least comprises the position of the external heat/cold sources. The defects are then detected said external information, as well as the determined exterior temperature profile and the locally averaged exterior temperature profile along the length of the insulated pipeline section or along the surface of the monitored insulated container.

Preferably, the defects are detected based on any of the methods according to the above embodiments and/or following embodiments.

In another aspect, the disclosure, not part of the claimed invention, relates to the use of the method according to the first aspect of the invention and/or the system of the above further aspect of the invention, for monitoring defects relating to moisture ingress of aboveground or underground, non-subsea pipeline sections or containers with an insulation layer.

In an alternative approach to the invention, the disclosure, not part of the claimed invention, relates to a method for monitoring defects in a pipeline section with an insulation layer, preferably for detecting moisture ingress in the insulation layer, comprising the steps of:
- attaching a sensor line, comprising a single optical fiber or a bundle of optical fibers, along the length of the insulated pipeline section and positioned on the exterior of the insulation layer;
- operatively coupling the sensor line to a temperature sensing system;
- determining an exterior temperature profile over the length of the insulated pipeline section via the temperature sensing system;
- detecting defects in the insulated pipeline section, characterized in that the defects are detected based on the determined exterior temperature profile and an assumed interior temperature profile along the length of the insulated pipeline section, wherein said assumed interior temperature profile is obtained without temperature measurements in the monitored insulated pipeline section or between the monitored insulated pipeline section and the insulation layer.

It should be noted that the application of the alternative approach to insulated containers, as with the first approach, is considered to form part of the disclosure, not part of the claimed invention, as well, with the changes to the method and system according to the alternative approach to be clear in view of what is described in the first approach.

Preferably, the temperature sensing system is a distributed temperature sensing (DTS) system. Alternatively, the temperature sensing system is a Fiber Bragg grating (FBG) temperature sensing system.

Preferably, the assumed interior temperature profile is obtained without fiber-optic based temperature sensing and/or distributed temperature sensing in the monitored insulated pipeline section or between the monitored insulated pipeline section and the insulation layer.

Preferably, the assumed interior temperature profile is determined based on temperature measurements of the substance in the insulated pipeline section before and/or after the insulated pipeline section.

Preferably, the defects are detected by comparing the determined exterior temperature profile to a calculated exterior temperature profile, wherein the calculated exterior temperature profile is calculated based on the assumed interior temperature profile and known and/or assumed insulation characteristics of the insulation layer, said insulation characteristics preferably comprising the thermal conductivity of the insulation layer.

Preferably, the defects are detected by comparing the assumed interior temperature profile to a calculated interior temperature profile, wherein the calculated interior temperature profile is calculated based on the determined exterior temperature profile and known and/or assumed insulation characteristics of the insulation layer, said insulation characteristics preferably comprising the thermal conductivity of the insulation layer.

Preferably, the defects are detected by comparing one or more known and/or assumed insulation characteristics, preferably a known and/or assumed thermal conductivity, of the insulation layer to calculated insulation characteristics, preferably a calculated thermal conductivity, of the insulation layer, wherein the calculated insulation characteristics are calculated based on the assumed interior temperature profile and the determined exterior temperature profile.

Preferably, the defects are detected based on a known or assumed thermal conductivity and/or a known or assumed thickness of the insulation material along the length of the insulated pipeline section.

Preferably, the method comprises a step of evaluating time series of spatial and temporal changes in the measured temperature profile, taking into account the assumed interior temperature profile, to detect defects.

Preferably, the method comprises a step of evaluating said measured temperature profiles and assumed interior temperature profiles via machine learning-based anomaly detection.

Preferably, environmental data is collected, said data comprising local environment temperature information, local precipitation information, local solar radiation information, meteorological information, comprising wind information, and/or information regarding external heat/cold sources. The defects are detected taking into account said collected environmental data and/or the information regarding the external heat/cold sources.

Preferably, the spatial distribution of the moisture ingress is assessed by a second sensor line attached along the length of the pipeline section to the exterior of the insulation layer, at a substantially opposite side with respect to the first sensor line, and wherein temperature measurements are performed by said second sensor line. Additionally, the disclosure, not part of the claimed invention, relates to a system for monitoring defects of insulated pipes comprising:
- a sensor line, comprising a single optical fiber or a bundle of optical fibers, along the length of the insulated pipeline section and positioned on the exterior of the insulation layer;
- a temperature sensing system, preferably a distributed temperature sensing (DTS) system or a Fiber Bragg grating (FBG) temperature sensing system, for determining an exterior temperature profile over the length of the insulated pipeline section;
- a data processing unit for detecting defects in the insulated pipeline section, characterized in that the defects are detected based on the measured exterior temperature profile and an assumed interior temperature profile along the length of the insulated pipeline section, wherein said assumed interior temperature profile is obtained without temperature measurements in the monitored insulated pipeline section or between the monitored insulated pipeline section and the insulation layer.

The system is configured for performing a method according to the alternative approach to the invention.

Furthermore, the disclosure, not part of the claimed invention, relates to the use of the method according to the alternative approach to the invention and/or a system according to the alternative approach to the invention, for monitoring defects of pipeline sections with an insulation layer.

In what follows, embodiments of the invention are described. Some seem to be only applicable to the first approach, others only to the alternative approach of the invention, while the rest is applicable to both. Unless explicitly stated otherwise, the following embodiments, can be applied to both the first and the alternative approach to the invention, as described above.

An important difference of this invention compared to prior art is that only one fiber is used in the present invention (i.e. on the outer side of the insulation layer). This invention describes a method where, in contrast to prior art, it is sufficient to measure the outside pipeline temperature by DTS or FBG sensing system to detect moisture ingress in the insulation which causes CUI. By measuring the temperature at the outside of an insulated pipeline, zones with moisture ingress can be detected. One could assume a substance temperature to calculate the thermal conductivity of the insulation. When the insulation becomes wet, the thermal conductivity of the insulation increases, causing the temperature at the outside of the pipeline insulation to become more similar to the pipeline temperature. Often, in plant conditions, the temperature of the liquid can be considered as constant in a pipeline section. Also, when the substance temperature at the in- and outlet of the pipeline is known, the spatial distribution of the substance temperature for the full pipeline can be interpolated.

It should be pointed at that an explicit advantage of the present invention is that it can be easily retrofitted on existing (already-insulated) pipelines, without needing to perform intrusive operations (removing and reapplying insulation layers), as it does not need to actually measure the temperature at the pipeline directly. However, in some circumstances, pipelines may have already been outfitted with temperature sensors over regular intervals. In those cases, as mentioned the invention can be very accurately applied in the pipe sections between those temperature sensors. In most cases, already available temperature sensors will not be present in sufficient numbers to allow a 'full' and reliable temperature profile (as moisture ingress may be present at sections between temperature sensors, but if these are too far from the point of ingress, this will go undetected), but then these can be used to interpolate/extrapolate an assumed temperature profile therebetween.

In some embodiments of the invention, the use of discrete measuring points can be integrated into the concept, and can lead to develop a more reliable (i.e. accurate) assumed interior temperature profile.

In most circumstances, the influence of the pipeline itself on the radial temperature profile (perpendicular to the longitudinal axis of the pipeline) in the insulated pipeline is limited. Most pipelines comprise metal walls and display excellent thermal conductivity characteristics, and it can be expected that the temperature of the substance in the pipeline is maintained to the outer surface of the pipeline, and only there substantially decreases due to the insulation layer (and the interface between pipeline and insulation layer). In this sense, it should be pointed out that the assumed interior profile will typically be the temperature profile for the substance (as in most cases, actual measurements or desired temperatures will be available for the substance, but not for the pipeline), but is essentially equal to the temperature of the pipeline wall. In the few cases where the pipeline may have a more noticeable effect on the thermal conductivity (and the radial temperature profile), this can however be taken into account, for instance based on the thermal conductivity of the pipeline and its thickness.

However, in most embodiments, a spatially/locally averaged exterior reference temperature will be used to compare the measured exterior temperature. This simplifies the methodology, as it requires virtually no knowledge of what's going on inside of the pipeline, and at the same time, anomalous measurements can be immediately identified and compensated for.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far as such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g., component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The term "fiber-optic cable", "optical fiber", "fiber-optical cable", or "optical fiber cable" refers to a cable containing one or more optical fibers. The optical fiber elements are typically individually coated with plastic layers and contained in a protective tube suitable for the environment where the cable will be deployed. A fiber-optic cable may be adapted to detect various changes and intrusions of a pipeline by sensing temperature or other parameters and may act as a guide to guide an optical signal at one end of a fiber-optic cable to another end of the cable.

The term "exterior" refers to everything outside of the insulation layer, and optionally outside of the cladding if present. The term "measured exterior temperature profile" refers to the temperature profile measured by the optical fiber cable attached outside of the insulation layer. Additionally, the term "expected exterior temperature profile" refers to a calculated or estimated temperature profile at the location where the exterior temperature profile is measured. Both are thus a temperature profile along the length of the pipeline.

The term "interior" refers to everything inside of the insulation layer, without the insulation layer included. Typically, this refers to the pipeline itself, and the contents thereof (substance passing through the pipeline). The term "assumed interior temperature profile" refers to the temperature profile that is calculated/estimated/assumed based on certain assumptions that are independent of the measured exterior temperature profile, for instance based on temperature measurements before and/or after the pipeline section, intended temperatures at which the substance is to be maintained, etc. The term "calculated interior temperature profile" is the temperature profile calculated at the location where the assumed interior temperature profile is assumed to be applicable, using the measured exterior temperature profile (amongst others). Both are thus a temperature profile along the length of the pipeline.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, although this may be the case. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the disclosure, not part of the claimed invention, relates to a fiber optic cable. The fiber optic cable may consist of a single optical fiber or may consist of a bundle of fibers (multicore). In this case, the other fibers may be used for communication purposes or for other fiber optic sensing and monitoring, such as acoustic or strain sensing. The fiber optic cable may consist of only a bare fiber, or it may be comprised of a plurality of fibers, surrounded by a plurality of coating layers, mantles, strength members and gels that protect the fiber from mechanical impacts, moisture, hydrogen ingress, and other impacts that may damage the fiber (such cables are widely available in the art). The fiber may also be housed in a hollow tube or microduct, e.g., for additional protection or to facilitate installation. The fiber may be a standard fiber such as those use in telecommunication applications, or it may be a fiber that is specially engineered for distributed fiber optic sensing or for FBG sensing.

The fiber optic cable is used as a temperature sensor. The temperature is measured along a plurality of points using fiber optic sensing (may be discrete or continuous), by connecting the fiber optic cable to a sensing system. Common fiber optic technologies are: distributed temperature sensing (DTS) and fiber Bragg gratings (FBG). The latter has different forms such as the continuous fiber Bragg gratings etc. Most sensor systems have a comparable accuracy and resolution. The sensor systems can differ based on the spatial resolution, sampling frequency and possibility to measure absolute/relative temperature. According to one embodiment, the sensing method used is Distributed Temperature Sensing, including sensing based on Brillouin, Rayleigh or Raman scattering. In another embodiment, the temperature sensing is based on Fiber Bragg Grating. In a preferred embodiment the fiber may be affixed to the cladding using adhesive tape.

In a further application, the invention can be used for anomaly detection by determining hot/cold spots, i.e., the difference between a measurement point and its surrounding points. In some embodiments, for a spot to be recognized as either hot or cold, the difference between a measured point and its surrounding points must be at least 0.1 °C/dm, or preferably 0.5 °C/dm, more preferably 1 °C/dm and most preferably 10 °C/dm. A significant temperature difference between two points at a difference of 0.1 m is 0.1 °C°. Of course, this requirement can be used in conjunction with other requirements, such as a minimal difference between the measured and calculated/expected temperature or the calculated and assumed temperature (or between the calculated and assumed/known thermal conductivity or other parameters).

In a further application, the invention detects anomalies via time series analysis of received data, further taking into account parameters such as insulation characteristics, temperature of the substance inside of the pipeline section, environmental factors (wind, rain) or external heat/cold sources (f. i. other pipelines), etc. Many of these parameters have a strong correlation with time (can be temporary or cyclical for instance), and time series analysis can provide useful insights or detect defects which are only visible temporarily or at certain times.

In a further application of the invention, the produced data from the measurements, calculations, assumptions and others can be fed into one or more machine learning models, in order to be able to identify true defects more accurately and/or faster, and filter out false positives. Such machine learning models may be supervised or unsupervised.

In a further application, the invention provides data processing. The fiber temperature sensing system sends its measurement data to a computer, either located on site near the sensing system, or elsewhere, in which case the data is transmitted via wired or wireless communication. The computer then processes the measurement data and performs the monitoring and defect detection. The results of the monitoring are then transmitted to the pipeline SCADA (Supervisory Control And Data Acquisition) system or to a web-based dashboard.

Difference in thermal conductivity of the pipeline insulation causes temperature variation at the outside of the insulation. The outside temperature will be closer to the pipeline temperature. In case of fluids hotter than the environmental temperature, this will lead to a hotspot. In case of fluids colder than the environmental temperature, this will lead to a coldspot. This can easily be detected with Distributed Temperature Sensing (DTS) or FBG temperature sensing system. A DTS or FBG system measures temperatures along the length of a fiber optic cable. By using a distributed temperature or FBG sensing system compatible fiber cable, the system can be designed to measure temperatures lower than -40°C and higher than 500°C. With the proposed system, moisture ingress in insulation around pipeline sections can be found.

Optionally, the data processing unit can be coupled with other data processing units of the installation. In chemical plants, often, a lot of information is known about the substances transported inside the pipes. Temperature measurements often occur inside reactors. Data of the temperature measurements before or after the insulated pipeline section can be used to make assumptions about the interior temperature profile. The spatial distribution of the temperature of the substance inside, can be interpolated for the full pipeline. This information aids the data processing unit to determine the interior temperature profile.

The detection of defects can be performed in a number of non-limiting variations. For instance, using the assumed interior temperature (profile) in/at the pipeline itself (usually that of the substance), and using the known thermal conductivity of the insulation layer and its thickness (or a combination thereof), the expected exterior temperature can be calculated, and compared to the measured exterior temperature. Of course, other factors can be used to more accurately determine the expected exterior temperature (for instance, influence of atmospheric conditions and such). Based on the comparison, a defect can then be detected if the measured and expected exterior temperatures differ (too strongly).

Alternatively, the inverse can be done, and starting from the measured exterior temperature and the thermal conductivity and thickness of the insulation layer, the expected interior temperature can be calculated and compared to the assumed interior temperature.

In a third option, the measured exterior temperature and assumed interior temperature and the known thickness of the insulation layer can be used to calculated an expected thermal conductivity, which is then compared to the known conductivity. Even further, the thermal conductivity can be assumed to be correct and used to calculate an expected thickness of the insulation layer, and again compared to the known thickness.

Certain thresholds can be established to indicate defects, such as differences above a certain percentages, such as at least 1%, preferably at least 2.5%, or even 5.0%, 10%, 20%, 30%, 40% or even 50%. However, in order to timely spot defects, a lower difference threshold is preferable. In some embodiments, the threshold is set at differences of at least 75%. The differences can also be set in absolute values, especially for temperature differences, such as 1°C, preferably at least 2.5°C, or even 5°, 10°C, 20°, but also for other parameters, such as for thermal conductivity differences, with a possible threshold of at least 0.001 W/(m·K), preferably at least 0.001 W/(m·K) or even 0.005 W/(m·K), 0.010 W/(m·K). Again, a lower threshold is preferred as it allows a higher sensitivity and a more preventive style of monitoring.

Wet insulation causes an increase in insulation thermal conductivity. Above a certain threshold, there is a sharp increase in thermal conductivity, as is mentioned in Achtziger, J., J. Cammerer 1984: 'Water Content versus Thermal Conductivity', (Einfluss des Feuchtegehaltes auf die Wärmeleitfähigkeit von Bau- und Dämmstoffen), FIW München.

In order to be able to detect moisture in insulation, the measured temperature at the outside of the pipeline in case of wet insulation should be different than the environmental surrounding temperature. The pipeline type is of no importance, neither is the insulation type. What is important, is that the heat/cold transfer of the pipeline through the wet insulation is large enough to be detected. The difference between the measured temperature at the outside of the pipeline and the ambient external temperature should be larger than the measurement accuracy of the DTS or FBG system (typically 0.5 °C).

Corrosion of metal also causes a change in thermal conductivity, as mentioned by Raudenský et al. (Impact of oxide scale on heat treatment of steels, 2014). This change in total thermal conductivity will cause a change in temperature, measured at the exterior of the insulated pipeline. Depending on the temperature, corrosion of the metal pipeline can cause an increase or decrease of the thermal conductivity. Corrosion is thus more easily observed if the temperature of the substance inside the pipeline section fluctuates. Furthermore, the quantity of moisture inside the insulation layer is in some circumstances not constant over time, which also leads to changing DTS/FBG temperatures. Corrosion of the metal pipeline section can thus be detected, based on the measured data, even if the moisture ingress is only temporary (or cyclical). Even the severity of corrosion can be determined based on said data. Precise temperature measurements are required to make these observations. Even though this system will prevent corrosion, it is also able to observe corrosion which may have been formed prior to its installation. The advantages of the invention allow continuous monitoring of the pipelines, thereby also overcoming temporary or cyclical issues. The effect of such influences can in some cases only become clear if monitored over longer periods of time (for instance, initial moisture ingress increasing thermal conductivity due to degradation of insulation layer, and later - relatively - decreasing thermal conductivity due to corrosion creating layers over the metal pipeline with low thermal conductivity).

Fiber optic sensing cable detects and measures temperatures along the radially outlying region of insulation layer. When adding 1 vol% of water, the efficiency of the insulation layer in the wetted region is reduced in such a way that the temperatures along the length of the insulated pipe can increase with almost 30° C compared to pipeline sections with dry insulation. The temperature increase caused by reduced insulation efficiency can easily be detected and measured by fiber optic sensing cable in the wetted region(s) along the insulated piping.

Once the change in temperature is detected by the system, the system can provide an audible and/or visual output for review by an operator. The pinpointed location of a change in the temperature enables the operator to examine and inspect the specific region of the insulated vessel potentially experiencing the problem. An operator, such as a plant operator, is able to evaluate the specific region or regions to determine whether any areas of insulation have actually become wetted. Depending on the extent and location of the intruding moisture, appropriate corrective action can be taken to reduce or eliminate moisture ingress and potential corrosion under insulation.

To be able to measure the temperature at the outside of the pipeline, the fiber should be in close contact with the pipeline jacketing. One possible way to assure this close contact is by taping the fiber with specialized tape in a tight matter to the jacketing. In this case, it may be beneficial that the fiber has a small diameter (< 2 mm).

Other possibilities are to place the fiber underneath the jacketing or in the insulation, but this is less efficient & easy to install.

The method and system to detect corrosion is also applicable for other insulated vessels, such as reactors, tanks and other assets.

Early detection of corrosion or other damage in pipelines may decrease maintenance and repair time, for example, by facilitating earlier intervention. Accordingly, real-time monitoring techniques that can monitor a segment of a pipeline or the entire length of the pipeline using fiber-optic cables may assist in early detection. As noted, the monitoring system may continue to utilize the fiber-optic cable to monitor for pipeline wall thickness and pipeline corrosion, erosion, or failures even when a portion of the fiber-optic cable is damaged. Such may be uniquely facilitated, for example, by employing multiple light sources and receivers along the fiber-optic cable. When a portion of the fiber-optic cable becomes damaged, the remaining undamaged portion of the fiber-optic cable may continue to be utilized to sense and collect data.

The applicant has unexpectedly observed that if the substance temperature is not known nor constant, the substance temperature does not need to be known to detect moisture ingress in the insulation. Because of the insulation, the substance temperature will not vary over short distance. Temperature anomalies measured at the outside of an insulated pipeline are caused by insulation characteristics, environmental factors (such as wind, rain etc.) or external heat/cold sources (such as other pipelines etc.). Moisture ingress in the insulation is mostly local and has a temporal component, for example a drying/wetting cycle. Because of these typical spatial and temporal characteristics of moisture ingress compared to other causes of temperature anomalies, moisture ingress can be identified through advanced time series analysis and/or machine learning.

The technology has extremely low installation overhead demands: minimal power cabling is required, and signal transmission is through the fiber optic sensing cable. The present invention attains the above-described objective by a single fiber optic cable permanently mounted at the exterior of the pipeline insulation. A second fiber optic cable is not needed on the inside of the pipe or insulation because the interior temperature profile is assumed based on other known parameters.

The advantages of only using one fiber are:
- that it allows an easy installation, especially when retrofitting older or already insulated pipelines, since the insulation and cladding does not need to be removed to install the fiber.
- that aberrant result cannot be hidden by mirrored variations (where the temperature results vary to a similar degree at both fibers).
- the assumption of a 'known' temperature at the pipeline, allows for a simplified determination of the thermal conductivity and/or deviating insulation characteristics
- Errors in pipeline temperature measurements are avoided.

In another preferred embodiment, is the fiber optic sensor installed at the inside of the cladding. A preferred installation position of the fiber at the outside of the pipeline jacketing is at the lowest point of the pipeline cross-section, because of gravity, to avoiding damage to the fiber, and to minimize local temperature fluctuations by solar radiation.

In another preferred embodiment, the optical fiber is installed in close contact with the cladding using adhesive tape. Other embodiments use glue, tie wraps or magnetic tape, magnets or other ways of fiber fixation.

In another embodiment, a second sensor line is attached along the length of the pipeline to the exterior of the insulation layer, opposite of the first sensor line. Similarly, to the first sensor line, the second sensor line will perform temperature measurements. This additional data-set gives more information with regard to the size and location of the moisture ingress in the insulation. This allows for a more precise localization of the moisture ingress.

## Claims

1. Method for monitoring defects in an aboveground or underground, non-subsea pipeline section (101) or container with an insulation layer (103) and jacketing (104), comprising the steps of,
- attaching a sensor line, comprising a single optical fiber or a bundle of optical fibers (105), along the length of the insulated pipeline section (101) or along the surface of the insulated container and positioned on the exterior of the insulation layer (103);
- operatively coupling the sensor line to a temperature sensing system;
- determining an exterior temperature profile over the length of the insulated pipeline section (101) or over the surface of the insulated container via the temperature sensing system;
- detecting defects in the insulated pipeline section (101) or over the surface of the insulated container,
wherein the optical fiber or optical fibers (105) are only present on the outer side of the insulation layer (103) and not on the inside of the pipeline section (101) or container or inside of the insulation layer (103), wherein the sensor line is provided in close contact with the jacketing (104) or underneath the jacketing (104);
wherein external information is collected, said external information comprising data regarding external heat/cold sources in the vicinity of the pipeline section (101) or container and/or said external information comprising environmental data, wherein said environmental data comprises local environment temperature information, local precipitation information, local solar radiation information, meteorological information, comprising wind information; and wherein said data regarding external heat/cold sources at least comprises the position of the external heat/cold sources; and that the defects are detected based on said external information, the determined exterior temperature profile and a locally averaged exterior temperature profile along the length of the insulated pipeline section(101) or over the surface of the insulated container, wherein said locally averaged exterior temperature profile is determined for a point by averaging the determined exterior temperature profile over a predetermined surrounding length or surface for said point,
**characterized in that** the defects relate to moisture ingress in the insulation layer (103) from outside of the pipeline section (101) or container or from condensation, and said defects preceding corrosion and leakage of the pipeline section (101) or container, and **in that** the defects are considered to be detected at a position if a local temperature difference of said position exceeds a predetermined threshold, said local temperature difference being the difference between the determined exterior temperature profile at said position and the locally averaged temperature profile for said position, wherein said threshold is at most 1.5 °C.

2. Method according to claim 1, wherein said data regarding external heat/cold sources at least comprises the position of the external heat/cold sources, said external cold sources comprising contact support structures made of metal or other thermally conductive materials.

3. Method according to any one of the preceding claims 1 or 2, wherein an absolute or relative depth of moisture ingress into the insulation layer (103) is calculated for each detected defect based on the determined exterior temperature profile and the locally averaged exterior temperature profile.

4. Method according to any of the preceding claims 1 to 3, wherein the defects are detected based on a temperature difference between the determined exterior temperature profile, and the locally averaged exterior temperature or the environmental, preferably atmospheric, temperature at or near to the pipeline section (101) or container, wherein an increase in the temperature difference indicates a higher moisture content of the insulation layer (103).

5. Method according to any one of the preceding claims 3 and 4, wherein the defects are detected taking into account known and/or assumed insulation characteristics of the insulation layer (103), said insulation characteristics comprising the thermal conductivity of the insulation layer (103).

6. Method according to any one of the preceding claims 1 to 5, wherein the defects are detected based on a lag between the determined exterior temperature profile, and the locally averaged exterior temperature or the environmental, preferably atmospheric, temperature at or near to the pipeline section (101) or container.

7. Method according to any one of the preceding claims 1 to 6, wherein the defects are detected based on the determined exterior temperature profile over a predefined time period, preferably based on a temporally averaged difference between the locally averaged exterior temperature profile and the determined exterior temperature profile over said predefined time period, said predefined time period preferably being at least 5 minutes, more preferably at least 1 hour, even more preferably at least 1 day and most preferably at least 1 week.

8. Method according to claim 7, wherein the temporally averaged difference excludes or associates a reduced weight to the determined exterior temperature profile during periods in said predefined time period, said periods being determined based on one or more of the following: time of day, season, wind conditions, other meteorological conditions, use parameters of the pipeline section (101) or container.

9. Method according to any of the preceding claims 1 to 8, wherein the temperature sensing system is a distributed temperature sensing (DTS) system or a Fiber Bragg grating (FBG) temperature sensing system.

10. Method according to any one of the preceding claims 1 to 9, wherein the locally averaged exterior temperature profile is obtained without fiber-optic based temperature sensing and/or distributed temperature sensing in the monitored insulated pipeline section (101) or the monitored insulated container, or between the monitored insulated pipeline section (101) or the monitored insulated container and the insulation layer (103).

11. Method according to any one of the preceding claims 1 to 10, wherein the defects are detected based on a lag between the determined exterior temperature profile, and the locally averaged exterior temperature or the environmental, preferably atmospheric, temperature at or near to the pipeline section or container, wherein an increase in the lag indicates a higher moisture content of the insulation layer (103).

12. Method according to any one of the preceding claims 1 to 11, wherein structural data is collected, said structural data comprising known points of support, on known locations, where the pipeline section (101) or container is supported by artificial elements, preferably said artificial elements having a thermal conductivity of at least 5 W/(m·K), preferably at least 10 W/(m·K), at room temperature, wherein the defects are detected based on said structural data.

13. Method according to any one of the preceding claims 1 to 12, wherein the external information comprises environmental data, said data comprising local environment temperature information, local precipitation information, local solar radiation information, meteorological information, comprising wind information; and wherein the defects are detected taking into account said collected environmental data.

14. Method according to any one of the preceding claims 1 to 13, wherein the spatial distribution of the moisture ingress is assessed by a second sensor line attached along the length of the pipeline section (101) or along the surface of the monitored insulated container to the exterior of the insulation layer (103), at a substantially opposite side with respect to the first sensor line, and wherein temperature measurements are performed by said second sensor line.

15. Method according to any one of the preceding claims 1 to 14, wherein said predetermined surrounding length is at least 0.5 m, preferably at least 1.0 m, more preferably at least 2.5 m, even more preferably at least 5.0 m, and is at most 500 m, preferably at most 250 m, more preferably at most 100 m, and even more preferably at most 50 m,
or wherein said surrounding surface is within a radius of at least 0.5 m, preferably at least 1.0 m, more preferably at least 2.5 m, even more preferably at least 5.0 m, and within a radius of at most 500 m, preferably at most 250 m, more preferably at most 100 m, and even more preferably at most 50 m.

## Patentansprüche

1. Verfahren zum Überwachen von Defekten in einem oberirdischen oder unterirdischen, nicht unterseeischen Pipeline-Abschnitt (101) oder Behälter mit einer Isolationsschicht (103) und Ummantelung (104), die folgenden Schritte umfassend:
- Anbringen einer Sensorleitung, die eine einzelne Glasfaser oder ein Bündel aus Glasfasern (105) umfasst, entlang der Länge des isolierten Pipeline-Abschnitts (101) oder entlang der Oberfläche des isolierten Behälters und auf dem Äußeren der Isolationsschicht (103) positioniert;
- funktionsfähiges Koppeln der Sensorleitung mit einem Temperaturabfühlsystem,
- Bestimmen eines Außentemperaturprofils über die Länge des isolierten Pipeline-Abschnitts (101) oder über die Oberfläche des isolierten Behälters mittels des Temperaturabfühlsystems,
- Erkennen von Defekten in dem isolierten Pipeline-Abschnitt (101) oder über die Oberfläche des isolierten Behälters,
wobei die Glasfaser oder Glasfasern (105) nur an der Außenseite der Isolationsschicht (103) und nicht im Inneren des Pipeline-Abschnitts (101) oder Behälters oder im Inneren der Isolationsschicht (103) vorhanden sind, wobei die Sensorleitung in engem Kontakt mit der Ummantelung (104) oder unter der Ummantelung (104) bereitgestellt ist,
wobei externe Informationen gesammelt werden, wobei die externen Informationen Daten bezüglich externer Wärme-/Kältequellen in der Nähe des Pipeline-Abschnitts (101) oder Behälters umfassen und/oder die externen Informationen Umgebungsdaten umfassen, wobei die Umgebungsdaten Informationen zur Temperatur der örtlichen Umgebung, Informationen zum örtlichen Niederschlag, Informationen zur örtlichen Sonnenstrahlung, meteorologische Informationen, die Informationen zum Wind umfassen, umfassen und wobei die Daten bezüglich der externen Wärme-/Kältequellen mindestens die Position der externen Wärme-/Kältequellen umfassen,
und dass die Defekte basierend auf den externen Informationen, dem bestimmten Außentemperaturprofil und einem örtlich gemittelten Außentemperaturprofil über die Länge des isolierten Pipeline-Abschnitts (101) oder über die Oberfläche des isolierten Behälters erkannt werden, wobei das örtlich gemittelte Außentemperaturprofil für einen Punkt bestimmt wird, indem das bestimmte Außentemperaturprofil über eine festgelegte umgebende Länge oder Oberfläche für den Punkt gemittelt wird,
**dadurch gekennzeichnet, dass** die Defekte ein Eindringen von Feuchtigkeit in die Isolationsschicht (103) von außerhalb des Pipeline-Abschnitts (101) oder Behälters oder von Kondensation betreffen und dass die Defekte Korrosion und Lecks des Pipeline-Abschnitts (101) oder des Behälters vorausgehen und dass die Defekte als an einer Position erkannt betrachtet werden, wenn eine örtliche Temperaturdifferenz der Position einen festgelegten Schwellenwert überschreitet, wobei die örtliche Temperaturdifferenz die Differenz zwischen dem bestimmten Außentemperaturprofil an der Position und dem örtlich gemittelten Temperaturprofil für die Position ist, wobei der Schwellenwert höchstens 1,5 °C beträgt.

2. Verfahren nach Anspruch 1, wobei die Daten bezüglich externer Wärme-/Kältequellen mindestens die Position der externen Wärme-/Kältequellen umfassen, wobei die externen Kältequellen Kontakttragestrukturen umfassen, die aus Metall oder anderen thermisch leitenden Materialien bestehen.

3. Verfahren nach einem der vorhergehenden Ansprüche 1 oder 2, wobei eine absolute oder relative Tiefe des Eindringens von Feuchtigkeit in die Isolationsschicht (103) für jeden erkannten Defekt basierend auf dem bestimmten Außentemperaturprofil und dem örtlich gemittelten Außentemperaturprofil berechnet wird.

4. Verfahren nach einem der vorhergehenden Ansprüche 1 bis 3, wobei die Defekte basierend auf einer Temperaturdifferenz zwischen dem bestimmten Außentemperaturprofil und der örtlich gemittelten Außentemperatur oder der Umgebungs-, vorzugsweise atmosphärischen, Temperatur an oder nahe dem Pipeline-Abschnitt (101) oder dem Behälter erkannt wird, wobei ein Anstieg der Temperaturdifferenz einen höheren Feuchtigkeitsgehalt der Isolationsschicht (103) angibt.

5. Verfahren nach einem der vorhergehenden Ansprüche 3 und 4, wobei die Defekte unter Berücksichtigung bekannter und/oder angenommener Isolationseigenschaften der Isolationsschicht (103) erkannt werden, wobei die Isolationseigenschaften das thermische Leitvermögen der Isolationsschicht (103) umfassen.

6. Verfahren nach einem der vorhergehenden Ansprüche 1 bis 5, wobei die Defekte basierend auf einer Verzögerung zwischen dem bestimmten Außentemperaturprofil und der örtlich gemittelten Außentemperatur oder der Umgebungs-, vorzugsweise atmosphärischen, Temperatur an oder nahe dem Pipeline-Abschnitt (101) oder dem Behälter erkannt wird.

7. Verfahren nach einem der vorhergehenden Ansprüche 1 bis 6, wobei die Defekte basierend auf dem bestimmten Außentemperaturprofil über eine vordefinierte Zeitspanne erkannt werden, vorzugsweise basierend auf einer zeitlich gemittelten Differenz zwischen dem örtlich gemittelten Außentemperaturprofil und dem bestimmten Außentemperaturprofil über die vordefinierte Zeitspanne, wobei die vordefinierte Zeitspanne vorzugsweise mindestens 5 Minuten beträgt, bevorzugter mindestens 1 Stunde, noch bevorzugter mindestens 1 Tag und am meisten bevorzugt mindestens 1 Woche.

8. Verfahren nach Anspruch 7, wobei die zeitlich gemittelte Differenz während Perioden in der vordefinierten Zeitspanne das bestimmte Außentemperaturprofil ausschließt oder ihm eine verringerte Gewichtung zuordnet, wobei die Perioden basierend auf einem oder mehreren des Folgenden bestimmt werden: Tageszeit, Jahreszeit, Windbedingungen, anderen meteorologischen Bedingungen, Nutzungsparametern des Pipeline-Abschnitts (101) oder Behälters.

9. Verfahren nach einem der vorhergehenden Ansprüche 1 bis 8, wobei das Temperaturabfühlsystem ein verteiltes Temperaturfühl(DTS)-System oder ein Faser-Bragg-Gitter(FBG)-Temperaturabfühlsystem ist.

10. Verfahren nach einem der vorhergehenden Ansprüche 1 bis 9, wobei das örtlich gemittelte Außentemperaturprofil ohne glasfaserbasiertes Temperaturabfühlen und/oder verteiltes Temperaturabfühlen in dem überwachten isolierten Pipeline-Abschnitt (101) oder dem überwachten isolierten Behälter erhalten wird oder zwischen dem überwachten isolierten Pipeline-Abschnitt (101) oder dem überwachten isolierten Behälter und der Isolationsschicht (103).

11. Verfahren nach einem der vorhergehenden Ansprüche 1 bis 10, wobei die Defekte basierend auf einer Verzögerung zwischen dem bestimmten Außentemperaturprofil und der örtlich gemittelten Außentemperatur oder der Umgebungs-, vorzugsweise atmosphärischen, Temperatur an oder nahe dem Pipeline-Abschnitt oder dem Behälter erkannt werden, wobei eine Zunahme der Verzögerung einen höheren Feuchtigkeitsgehalt der Isolationsschicht (103) angibt.

12. Verfahren nach einem der vorhergehenden Ansprüche 1 bis 11, wobei Strukturdaten gesammelt werden, wobei die Strukturdaten bekannte Tragepunkte an bekannten Stellen umfassen, an denen der Pipeline-Abschnitt (101) oder der Behälter durch künstliche Elemente getragen wird, wobei die künstlichen Elemente vorzugsweise ein thermisches Leitvermögen bei Raumtemperatur von mindestens 5 W/(m·K), vorzugsweise mindestens 10 W/(m·K) umfassen, wobei die Defekte basierend auf den Strukturdaten erkannt werden.

13. Verfahren nach einem der vorhergehenden Ansprüche 1 bis 12, wobei die externen Informationen Umgebungsdaten umfassen, wobei die Daten Informationen zur Temperatur der örtlichen Umgebung, Informationen zum örtlichen Niederschlag, Informationen zur örtlichen Sonnenstrahlung, meteorologische Informationen, die Informationen zum Wind umfassen, umfassen und wobei die Defekte unter Berücksichtigung der gesammelten Umgebungsdaten erkannt werden.

14. Verfahren nach einem der vorhergehenden Ansprüche 1 bis 13, wobei die räumliche Verteilung des Eindringens von Feuchtigkeit durch eine zweite Sensorleitung bewertet wird, die entlang der Länge des Pipeline-Abschnitts (101) oder entlang der Oberfläche des überwachten isolierten Behälters am Äußeren der Isolationsschicht (103) angebracht ist, an einer in Bezug auf die erste Sensorleitung im Wesentlichen gegenüberliegenden Seite, und wobei durch die zweite Sensorleitung Temperaturmessungen durchgeführt werden.

15. Verfahren nach einem der vorhergehenden Ansprüche 1 bis 14, wobei die festgelegte umgebende Länge mindestens 0,5 m beträgt, vorzugsweise mindestens 1,0 m, bevorzugter mindestens 2,5 m, noch bevorzugter mindestens 5,0 m und höchstens 500 m, vorzugsweise höchstens 250 m, bevorzugter höchstens 100 m und noch bevorzugter höchstens 50 m beträgt,
wobei die umgebende Fläche innerhalb eines Radius von mindestens 0,5 m liegt, vorzugsweise mindestens 1,0 m, bevorzugter mindestens 2,5 m, noch bevorzugter mindestens 5,0 m und innerhalb eines Radius von höchstens 500 m, vorzugsweise höchstens 250 m, bevorzugter höchstens 100 m und noch bevorzugter höchstens 50 m.

## Revendications

1. Procédé permettant de surveiller des défauts dans une section de pipeline (101) non sous-marine, aérienne ou souterraine, ou dans un contenant avec une couche d'isolation (103) et une gaine (104), comprenant les étapes consistant à :
- fixer une ligne de détection, comprenant une fibre optique unique ou un faisceau de fibres optiques (105), le long de la longueur de la section de pipeline isolée (101) ou le long de la surface du contenant isolé et positionnée à l'extérieur de la couche d'isolation (103) ;
- accoupler fonctionnellement la ligne de détection à un système de détection de température ;
- déterminer un profil de température extérieure sur la longueur de la section de pipeline isolée (101) ou sur la surface du contenant isolé par le biais du système de détection de température ;
- détecter des défauts dans la section de pipeline isolée (101) ou sur la surface du contenant isolé,
dans lequel la fibre optique ou les fibres optiques (105) sont présentes uniquement sur le côté extérieur de la couche d'isolation (103) et non à l'intérieur de la section de pipeline (101) ou du contenant ou à l'intérieur de la couche d'isolation (103), dans lequel la ligne de détection est disposée en contact étroit avec la gaine (104) ou sous la gaine (104) ;
dans lequel des informations externes sont collectées, lesdites informations externes comprenant des données concernant des sources externes de chaleur/froid à proximité de la section de pipeline (101) ou du contenant et/ou lesdites informations externes comprenant des données environnementales, dans lequel lesdites données environnementales comprennent des informations de température d'environnement local, des informations de précipitations locales, des informations de rayonnement solaire local, des informations météorologiques, comprenant des informations de vent; et dans lequel lesdites données concernant des sources externes de chaleur/froid comprennent au moins la position des sources externes de chaleur/froid ;
et que les défauts sont détectés sur la base desdites informations externes, du profil de température extérieure déterminé et d'un profil de température extérieure moyennée localement le long de la longueur de la section de pipeline isolée (101) ou sur la surface du contenant isolé, dans lequel ledit profil de température extérieure moyennée localement est déterminé pour un point en faisant la moyenne du profil de température extérieure déterminé sur une longueur ou une surface environnante prédéterminée pour ledit point,
**caractérisé en ce que** les défauts sont liés à une pénétration d'humidité dans la couche d'isolation (103) depuis l'extérieur de la section de pipeline (101) ou du contenant ou à partir de condensation, et lesdits défauts précèdent la corrosion et des fuites de la section de pipeline (101) ou du contenant, et **en ce que** les défauts sont considérés comme détectés à une position si une différence de température locale de ladite position dépasse un seuil prédéterminé, ladite différence de température locale étant la différence entre le profil de température extérieure déterminé au niveau de ladite position et le profil de température moyennée localement pour ladite position, dans lequel ledit seuil est d'au plus 1,5 °C.

2. Procédé selon la revendication 1, dans lequel lesdites données concernant des sources externes de chaleur/froid comprennent au moins la position des sources externes de chaleur/froid, lesdites sources externes de froid comprenant des structures de support de contact en métal ou en d'autres matériaux thermiquement conducteurs.

3. Procédé selon l'une quelconque des revendications précédentes 1 ou 2, dans lequel une profondeur absolue ou relative de pénétration d'humidité dans la couche d'isolation (103) est calculée pour chaque défaut détecté sur la base du profil de température extérieure déterminé et du profil de température extérieure moyennée localement.

4. Procédé selon l'une quelconque des revendications précédentes 1 à 3, dans lequel les défauts sont détectés sur la base d'une différence de température entre le profil de température extérieure déterminé et la température extérieure moyennée localement ou la température environnementale, de préférence atmosphérique, au niveau ou à proximité de la section de pipeline (101) ou du contenant, dans lequel une augmentation de la différence de température indique une teneur en humidité plus élevée de la couche d'isolation (103).

5. Procédé selon l'une quelconque des revendications précédentes 3 et 4, dans lequel les défauts sont détectés en tenant compte de caractéristiques d'isolation connues et/ou supposées de la couche d'isolation (103), lesdites caractéristiques d'isolation comprenant la conductivité thermique de la couche d'isolation (103).

6. Procédé selon l'une quelconque des revendications précédentes 1 à 5, dans lequel les défauts sont détectés sur la base d'un décalage entre le profil de température extérieure déterminé et la température extérieure moyennée localement ou la température environnementale, de préférence atmosphérique, au niveau ou à proximité de la section de pipeline (101) ou du contenant.

7. Procédé selon l'une quelconque des revendications précédentes 1 à 6, dans lequel les défauts sont détectés sur la base du profil de température extérieure déterminé sur une période de temps prédéfinie, de préférence sur la base d'une différence moyennée temporellement entre le profil de température extérieure moyennée localement et le profil de température extérieure déterminé sur ladite période de temps prédéfinie, ladite période de temps prédéfinie étant de préférence d'au moins 5 minutes, plus préférentiellement d'au moins 1 heure, encore plus préférentiellement d'au moins 1 jour et idéalement d'au moins 1 semaine.

8. Procédé selon la revendication 7, dans lequel la différence moyennée temporellement exclut ou associe un poids réduit au profil de température extérieure déterminé pendant des périodes dans ladite période de temps prédéfinie, lesdites périodes étant déterminées sur la base d'un ou plusieurs parmi : l'heure de la journée, la saison, les conditions de vent, d'autres conditions météorologiques, des paramètres d'utilisation de la section de pipeline (101) ou du contenant.

9. Procédé selon l'une quelconque des revendications précédentes 1 à 8, dans lequel le système de détection de température est un système de détection de température distribuée (DTS) ou un système de détection de température à réseau de Bragg à fibre (FBG).

10. Procédé selon l'une quelconque des revendications précédentes 1 à 9, dans lequel le profil de température extérieure moyennée localement est obtenu sans détection de température basée sur une fibre optique et/ou détection de température distribuée dans la section de pipeline isolée surveillée (101) ou le contenant isolé surveillé, ou entre la section de pipeline isolée surveillée (101) ou le contenant isolé surveillé et la couche d'isolation (103).

11. Procédé selon l'une quelconque des revendications précédentes 1 à 10, dans lequel les défauts sont détectés sur la base d'un décalage entre le profil de température extérieure déterminé et la température extérieure moyennée localement ou la température environnementale, de préférence atmosphérique, au niveau ou à proximité de la section de pipeline ou du contenant, dans lequel une augmentation du décalage indique une teneur en humidité plus élevée de la couche d'isolation (103).

12. Procédé selon l'une quelconque des revendications précédentes 1 à 11, dans lequel des données structurales sont collectées, lesdites données structurales comprenant des points d'appui connus, sur des emplacements connus, où la section de pipeline (101) ou le contenant est supporté par des éléments artificiels, de préférence lesdits éléments artificiels ayant une conductivité thermique d'au moins 5 W/(m·K), de préférence d'au moins 10 W/(m·K), à température ambiante, dans lequel les défauts sont détectés sur la base desdites données structurales.

13. Procédé selon l'une quelconque des revendications précédentes 1 à 12, dans lequel les informations externes comprennent des données environnementales, lesdites données comprenant des informations de température d'environnement local, des informations de précipitations locales, des informations de rayonnement solaire local, des informations météorologiques, comprenant des informations de vent ;
et dans lequel les défauts sont détectés en tenant compte desdites données environnementales collectées.

14. Procédé selon l'une quelconque des revendications précédentes 1 à 13, dans lequel la répartition spatiale de la pénétration d'humidité est évaluée par une seconde ligne de détection fixée le long de la longueur de la section de pipeline (101) ou le long de la surface du contenant isolé surveillé à l'extérieur de la couche d'isolation (103), sur un côté sensiblement opposé par rapport à la première ligne de détection, et dans lequel des mesures de température sont effectuées par ladite seconde ligne de détection.

15. Procédé selon l'une quelconque des revendications précédentes 1 à 14, dans lequel ladite longueur environnante prédéterminée est d'au moins 0,5 m, de préférence d'au moins 1,0 m, plus préférentiellement d'au moins 2,5 m, encore plus préférentiellement d'au moins 5,0 m, et est d'au plus 500 m, de préférence d'au plus 250 m, plus préférentiellement d'au plus 100 m, et encore plus préférentiellement d'au plus 50 m,
ou dans lequel ladite surface environnante se trouve dans un rayon d'au moins 0,5 m, de préférence d'au moins 1,0 m, plus préférentiellement d'au moins 2,5 m, encore plus préférentiellement d'au moins 5,0 m, et dans un rayon d'au plus 500 m, de préférence d'au plus 250 m, plus préférentiellement d'au plus 100 m, et encore plus préférentiellement d'au plus 50 m.
